Europäisches Patentamt

European Patent Office

Office européen des brevets

(11) Publication number: **0 382 413**
**A1**

## EUROPEAN PATENT APPLICATION

(21) Application number: 90301078.3

(22) Date of filing: 01.02.90

(51) Int. Cl.⁵: **F16D 3/77, F16H 41/24**

(30) Priority: 04.02.89 GB 8902508

(43) Date of publication of application:
**16.08.90 Bulletin 90/33**

(84) Designated Contracting States:
**AT BE CH DE ES FR GB IT LI NL SE**

(71) Applicant: **ROVER GROUP LIMITED**
**Fletchamstead Highway**
**Canley Coventry CV4 9DB(GB)**

(72) Inventor: **Holme, Harold Robert**
**Spencer House, Caunsall Road**
**Caunsall, Nr Kidderminster DY11 5YL(GB)**

(74) Representative: **Burrage, David John et al**
**The Rover Group plc Patent & Trademark**
**Department Cowley Body Plant Cowley**
**GB-Oxford OX4 5NL(GB)**

(54) A flexible coupling and motor vehicle incorporating same.

(57) A flexible coupling (1) is provided for use in a motor vehicle to transmit drive between two coaxial rotating elements of differing radii, for example between an engine output shaft and a torque converter shell. The coupling includes substantially rigid means (2) and axially resilient means (8), the substantially rigid means being connectible to the element of smaller radius and the axially resilient means being connectible to the element of larger radius. The substantially rigid means (2) is connected to the axially resilient means (8) at first connections (19) and the axially resilient means is connectible to the element of larger radius at second connections (14) spaced from the first connections.

Fig.1

Xerox Copy Centre

## A FLEXIBLE COUPLING AND MOTOR VEHICLE INCORPORATING SAME

The present invention relates to flexible couplings, in particular to a flexible transmission coupling for use in a motor vehicle, and more particularly for use between an engine output shaft and a torque converter shell of an adjacent automatic transmission gearbox.

Reliable transmission of drive between the engine and the torque converter of an automatic transmission gearbox axially aligned therewith has caused difficulties. These arise in particular when the engine and gearbox are to be mounted transversely to drive the front wheels when overall width across the vehicle can become critical. Because convenient points on the shaft and shell through which to transmit drive tend to have greatly differing radii respectively, a radially extending but axially short flexible coupling is required.

The above requirement causes difficulties mainly because the torque converter shell expands and contracts under load, often unevenly, causing axial displacement of the shell and swash to occur. As the shell has to connect with the engine output shaft which does not undergo such corresponding variations in movement axial misalignment between the shell and output shaft will occur in these circumstances. It will be appreciated that such relative movement between the output shaft and shell can cause high fluctuating stresses to occur in a coupling linking them together.

To accommodate the relative movement between the shaft and shell it is well known to provide a sheet metal disk to transmit the drive. The disk is connected to a flange on the output shaft by a number of bolts. The bolts pass through the flange, through the disk and also through a pair of rings positioned on either side of the disk. These rings act to relieve stress in the disk in the region of the bolt holes. The disk is connected to the torque converter shell by bolts or other fastening means around an outer periphery of the disk. Drive is thus transmitted from the relatively small diameter shaft to the relatively large diameter shell through the disk which can undergo a combination of tensile, compressive, shear and bending stress under normal conditions of use. As the disk has to be made of sufficiently thin material to allow flexing and yet sufficiently thick material to transmit drive, disk failure after an extended period of use or after relatively short periods of high speed use can occur. Undesirable noise propogation from the disk can also occur.

It is also known from GB2121918 to provide such a disk with a number of kidney shaped cutouts to increase the strength of the disk with respect to fatigue loads, to smooth offset and swash and to reduce frettage corrosion at the fastening elements. A spiral force path between inner flange and outer fastening points is said to result.

It is an object of the invention to overcome the difficulties associated with the prior art.

According to the invention there is provided a flexible coupling for use in a motor vehicle to transmit drive between two coaxial rotating elements of differing radii, the coupling including substantially rigid means and axially resilient means, the substantially rigid means being connectible to the element of smaller radius and the axially resilient means being connectible to the element of larger radius, wherein the substantially rigid means is connected to the axially resilient means at first connections and the axially resilient means is connectible to the element of larger radius at second connections spaced from the first connections.

A flexible coupling is thus provided where drive transmitted through the coupling relatively close to the axis thereof takes place through the substantially rigid means and where axial movement of either rotating element is accommodated by the axially resilient means.

The first element may be a vehicle engine output shaft and the second element may be a transmission torque converter shell.

High clamping loads necessary to clamp the thin disk to the engine output shaft in order to avoid bolts which bolt the engine output shaft to the coupling disk from vibrating loose may now be confined to the substantially rigid means which may be of heavier construction than previously and therefore less liable to fatigue failure in the clamping areas.

Preferably the first connections lie at a radius of more than half that at which the second connections lie from the coupling axis, more preferably said first connections lie at a radius of at least 75% of that at which the second connections lie and most preferably at a radius substantially that of the second connections. The first connections are also preferably circumferentially spaced from the second connections, thus reducing the load transmitted through the axially resilient means as far as possible consistent with working within the radial dimensions of the second element.

The axially resilient means may be an annular element of sheet material and the second connections may be spaced circumferentially around the resilient means substantially equidistant from one another.

In an alternative construction the axially resilient means may comprise a series of straps, each strap linking a first and second connection.

For a smooth transmission of drive the first and second connections are preferably circumferentially alternately spaced respectively, the first connections also preferably being circumferentially substantially equidistant from one another.

Desirably, the axially resilient means has a radial thickness relatively small compared to the outside diameter thereof in order to permit a degree or radial flexion of the resilient means during transmission of drive without undue stress being created therein. Torque converter swash or misalignment between the torque converter shell and engine output shaft may thus be accommodated by radial flexion of the axially resilient means. Also, unwanted noise generated previously on occasions by a 'sounding' board effect of a flexible disk being caused to vibrate is also minimised with radially thin axially resilient means.

The substantially rigid means is preferably a single member and may have an inner flange portion to which the element of smaller radius is attached and a number of arms, preferably 3, extending radially outwardly from the flange portion, each arm having a said first connection at a peripheral end thereof.

A starter motor ring gear may be mounted on the substantially rigid means for starting the engine; the ring gear thereby being provided with a stable substantially rigid mounting.

Similarly, an ignition reluctor ring may be mounted on the substantially rigid means.

Means attached to the substantially rigid means may extend adjacent at least one second connection to be engageable with said at least one second connection in order to transmit the drive, should the axially resilient means fail.

The means extending adjacent at least one second connection is preferably the ring gear which may comprise an aperture adjacent each second connection to receive, for example, a bolt head comprising part of said second connection therein.

The engagement thus takes place between the bolt head connecting the axially resilient means to the second element and an aperture in the starter ring in which the bolt head is a clearance fit.

If the bolt heads are a clearance fit in the apertures a considerable noise will be generated by movement of the head within the aperture, upon failure of the axially resilient means, during transmission of drive. This noise will serve to warn the driver of failure of the coupling and of the need for replacement as soon as convenient.

The invention will now be more particularly described with reference to a preferred imbodiment thereof as illustrated in the accompanying drawing of which :-

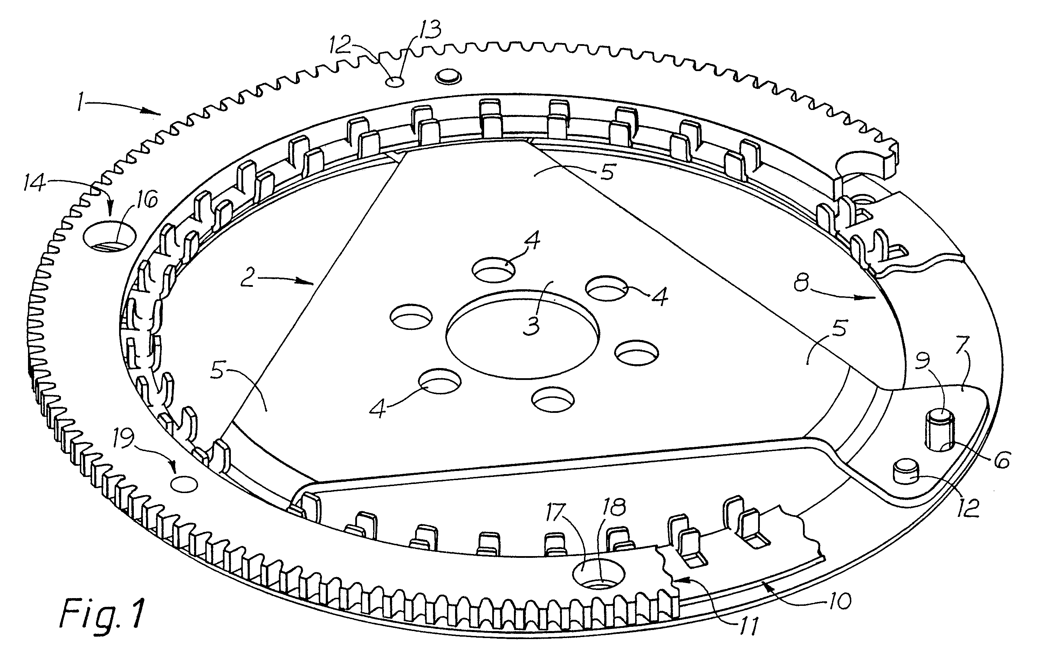

Figure 1 is a top cutaway perspective view of a coupling according to one embodiment of the invention,

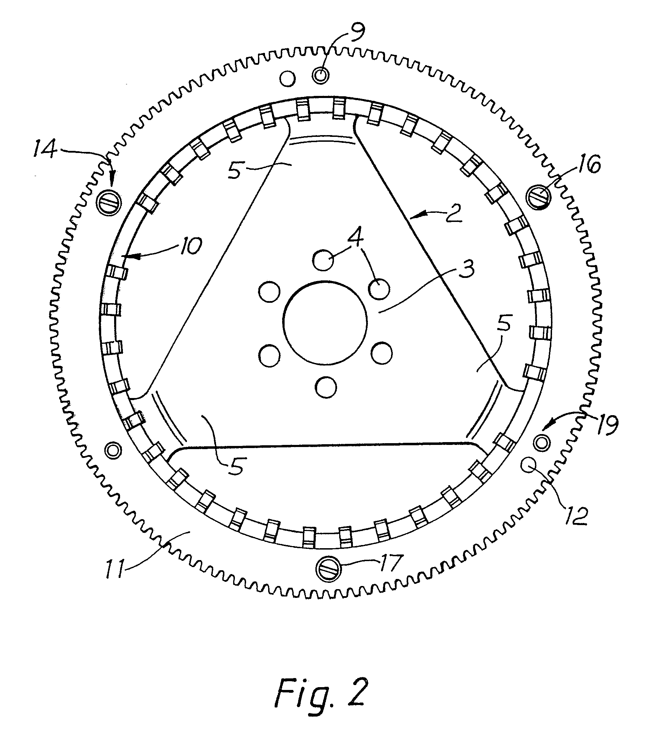

Figure 2 is a top plan view of the coupling of Figure 1,

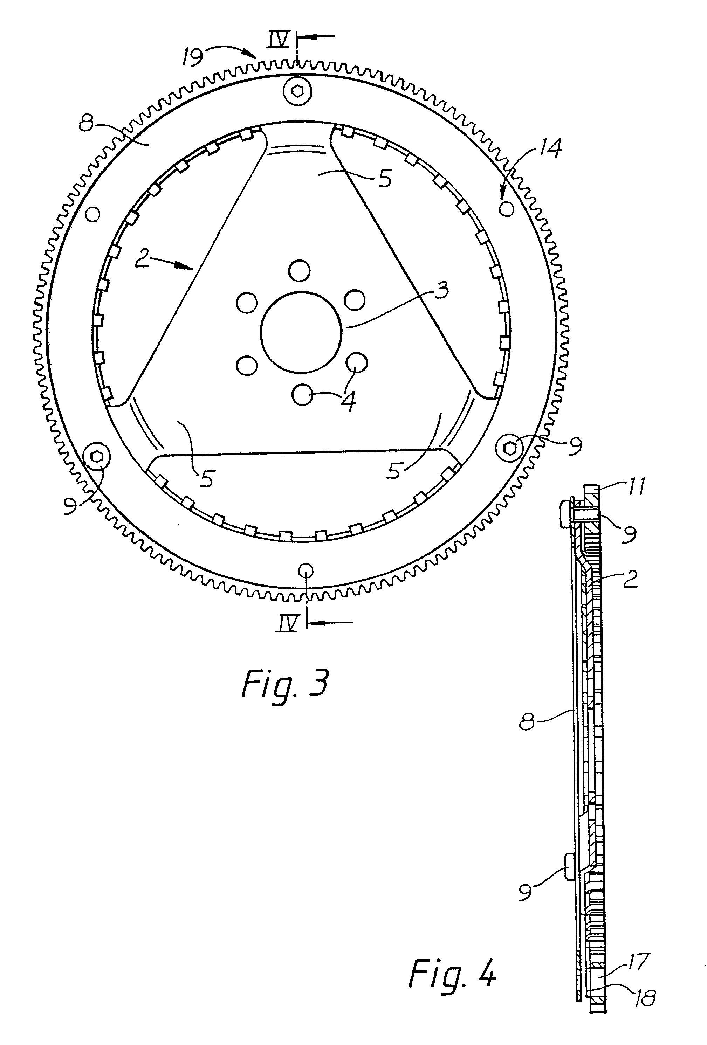

Figure 3 is a bottom plan view of the coupling of Figure 1, and

Figure 4 is a sectional view taken along the line IV-IV of Figure 3.

Referring to the drawing, a flexible coupling 1 according to the invention has substantially rigid means in the form of a heavy gauge plate 2 with an inner flange portion 3 having holes 4 for receiving bolts therein. The plate has three radially extending arms 5 each having a first aperture 6 comprising part of a first connection 19 at a peripheral end 7 thereof. Axially resilient means in the form of an annular metal pressing 8 of thickness less than half that of the plate 2 has bolts 9 forming another part of the first connections 19 with the arms 5 of the plate 2. Each bolt 9 is a sliding fit in its cooperating first aperture 6 to provide drive between the plate 2 and the pressing 8.

An ignition reluctor ring 10 and a starter ring 11 are each connected to the plate 2 via the first connections 19. Dowels 12 are provided on two of the arms 5 to engage in driving apertures 13 to provide positive location for drive between the starter ring 11 and the plate 2.

It will be noted that the pressing 8 is positioned on the opposite side of each arm 5 from the reluctor ring 10 and starter ring 11. This arrangement allows for axial flexing of the pressing 8 at positions remote from the arms 5 without interfering with the starter and reluctor rings.

Three second connections 14 are equally spaced around the coupling 1 and are equally spaced from each bolt 9 of the first connections 19.

Each second connection 14 connects the coupling 1 with a torque converter shell (not shown). A screw 16 clamps the pressing 8 at each second connection 14 to the torque converter shell. Each screw 16 has an enlarged head which is a clearance fit in enlarged apertures 17 and 18 in the starter ring 11 and reluctor ring 10 respectively.

In use the plate 2 is bolted by the flange portion 3 to a flange of an engine crankshaft (not shown). Drive is thus transmitted from the crankshaft radially outwardly along each arm 5 to a first connection 19 and thereafter around the pressing 8 between a first connection 19 and a second connection 14 whence to the torque converter shell.

The radial width of the pressing is kept as small as practicable consistant with reliability in order to make allowance for any misalignment of axes or radial flexing of the torque converter shell during transmission of drive. Such misalignment or radial flexing, because of the relatively narrow radial width of the pressing, will not impose undue stress on the pressing. This is in contrast to a flexible disc transmitting drive between the crankshaft flange and the torque converter shell where any misalignment or radial movement between the crankshaft and torque converter shell would impose considerably higher stresses within the disk for a given misalignment. Furthermore, as there is a reduction in radial stress within the coupling when such misalignment takes place, bearing stresses will be proportionally reduced giving longer bearing life.

In the event of prolonged use or extreme working conditions it is possible that a fracture may occur at some position in the pressing. In these circumstances drive between the plate 2 and the torque converter shell will be allowed to continue via the starter ring engaging, via an enlarged aperture 17, with an enlarged headed bolt 16 in the aperture. Because of the clearance between the enlarged aperture and the enlarged bolt head considerable noise will be generated which will serve to warn the driver of the vehicle that replacement of the pressing has become necessary.

It has been found that where a coupling of the flexible disc type has been replaced by a coupling according to the present invention a reduction in the effective (and actual) axial length of the coupling near the centre from approximately 10mm to less than 6 mm, ie approximately 3.5mm has resulted, ie a thickness of the substantially rigid means of approximately 3.5mm has been found acceptable. This reduction results, at least in part, from the ability of the substantially rigid means to withstand considerably higher bolt up loads when bolted to the crankshaft than a flexible disk is able to. With a flexible disk, it is normally necessary to clamp the disk between a pair of clamping rings or similar stress-relieving means in order more evenly to distribute the bolt up loads through the relatively thin material of the disk. The additional thickness of the stress-relieving means consequently gives an effective axial length of the flexible disk coupling near the centre of approximately the said 10mm. A saving in assembly time will also consequently result when installing the coupling of the invention.

## Claims

1. A flexible coupling (1) for use in a motor vehicle to transmit drive between two coaxial rotating elements of differing radii, the coupling including substantially rigid means (2) and axially resilient means (8), the substantially rigid means being connectible to the element of smaller radius and the axially resilient means being connectible to the element of larger radius, wherein the substantially rigid means (2) is connected to the axially resilient means (8) at first connections (19) and the axially resilient means is connectible to the element of larger radius at second connections (14) spaced from the first connections.

2. A flexible coupling according to claim 1, wherein the effective axial length of the coupling near the centre thereof is less than six millimetres.

3. A flexible coupling according to claim 1 or 2, wherein the first connections (19) lie at a radius from the coupling axis at least 75% of that at which the second connections (14) lie.

4. A flexible coupling according to claim 1 or 2, wherein the first connections (19) lie at a radius from the coupling axis substantially that at which the second connections (14) lie.

5. A flexible coupling according to any preceding claim, wherin the first and second connections (19, 14) are circumferentially equidistantly spaced from each other alternately around the coupling.

6. A flexible coupling according to any preceding claim, wherein the axially resilient means (8) has a radial thickness relatively small with respect to the outside diameter thereof.

7. A flexible coupling according to any preceding claim, wherein the axially resilient means is an annular element (8) of sheet material.

8. A flexible coupling according to any of claims 1 to 5, wherein the axially resilient means (8) comprises a series of straps, each strap linking a first and second connection (19, 14).

9. A flexible coupling according to any preceding claim, wherein the substantially rigid means (2) is a single member having an inner flange portion (3) to which the element of smaller radius is attached and a number of arms (5) extending radially outwardly from the flange portion (3), each arm (5) having a first connection (19) at a peripheral end (7) thereof.

10. A flexible coupling according to any preceding claim, wherein a vehicle starter motor ring gear (11) is mounted on the substantially rigid means (2) for starting an engine of the vehicle.

11. A flexible coupling according to any preceding claim, wherein means (11) attached to the substantially rigid means (2) extends adjacent at least one second connection (14) to be engageable, upon failure of the axially resilient means (8), with said at least one second connection (14) in order to transmit the drive.

12. A flexible coupling according to claim 11, when dependant upon claim 10, wherein the means extending adjacent at least one second connection is the ring gear (11).

13. A flexible coupling according to claim 12, wherein the ring gear (11) comprises an aperture (17) adjacent each second connection (14) to receive a bolt (16) head comprising part of said second connection (14) therein.

14. A flexible coupling according to claim 13, wherein the bolt (16) head is a clearance fit in said aperture (17).

15. A flexible coupling according to any preceding claim, wherein an ignition reluctor ring (10) is mounted on the substantially rigid means (2).

16. A motor vehicle incorporating a flexible coupling (1) according to any of the preceding claims which coupling is located to transmit drive between an engine output shaft and a torque converter.

Fig.1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 281 256 (BROWN, BOVERI & CIE AG) * Page 1, lines 28-33; page 2, lines 9-16,21-24; page 2, line 33 - page 3, line 19; claim 1; figure * | 1,3,4,6,8,10 | F 16 D 3/77 F 16 H 41/24 |
| Y | US-A-2 858 681 (SMIRL et al.) * Column 2, lines 16-43; column 3, lines 5-71; figures 1-3,5,6 * | 1,3,4,6,8,10,11-14,16 | |
| A | US-A-3 063 742 (HOWARD) * Column 2, lines 28-37; figure 1 * | 1,3,6,7,10 | |
| A | US-A-4 689 953 (WANG) * Figures; claim 1 * | 1,3,6,8,10 | |
| A | GB-A- 763 258 (CROFTS ENGINEERS LTD) * Page 2, lines 7-34; figure 1 * | 11 | |
| A | FR-A-2 379 735 (KLÖCKNER-HUMBOLDT-DEUTZ AG) * Figure 2 * | 1 | TECHNICAL FIELDS SEARCHED (Int. Cl.5) |
| A | US-A-2 945 367 (MICHELL) | | F 16 D F 16 H |
| A | FR-A-1 434 707 (FICHTEL & SACHS AG) | | |

The present search report has been drawn up for all claims

| Place of search | Date of completion of the search | Examiner |
|---|---|---|
| THE HAGUE | 03-05-1990 | GUTHMULLER J.A.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)